# EUROPEAN PATENT APPLICATION

(11) **EP 3 118 302 A1**
(43) Date of publication of application: **18.01.2017**
(21) Application number: 15176530.2
(22) Date of filing: 13.07.2015
(51) Int. Cl.: C11D 17/00, B01F 17/00, C02F 1/68

(54) **METHOD OF VISUALIZING THE CLEANING PERFORMANCE OF A CLEANING COMPOSITION**

(71) Applicant: The Procter & Gamble Company, Cincinnati, OH 45202 (US)
(72) Inventor: BOERS, Wesley Yvonne Pieter, 1853 Strombeek-Bever (BE); VANCAMPENHOUT, Peter, 1853 Strombeek-Bever (BE); GONZALES, Denis Alfred, 1853 Strombeek-Bever (BE); DKIDAK, Aicha, 1853 Strombeek-Bever (BE); BETTIOL, Jean-Luc, 1853 Strombeek-Bever (BE)
(74) Representative: Yorquez Ramirez, Maria Isabel

(57) **Abstract**

A method of visualizing the cleaning performance of a cleaning composition, said method comprising the steps of: (a) providing an oil medium, a water medium and an oil-water interface; (b) adding an effective amount of the cleaning composition to the oil medium; and (c) observing the cleaning composition travelling along the oil medium to break out the oil-water interface.

## Description

### TECHNICAL FIELD

The present invention relates to a method of visualizing the cleaning performance of a cleaning composition and to compositions having good cleaning performance.

### BACKGROUND OF THE INVENTION

The marketing and sales promotion of cleaning products, such as dish detergents, can benefit greatly by conducting demonstrations, either live or via broadcast media that provide reliable and repeatable results to show the cleaning performance of the product. Demonstration methods that effectively present the benefits of a cleaning product to the consumer typically result in a greater chance that a consumer will try the product.

During the development of cleaning products, it is important to have methods that discriminate the performance of cleaning compositions. Ideally, the method should be easy to implement.

There continues to be a need to provide methods for demonstrating the cleaning performance of a cleaning product that are easily repeatable and that provide reliable results.

### SUMMARY OF THE INVENTION

According to a first aspect of the invention, there is provided a method of visualizing the cleaning performance of a cleaning composition, in particular the cleaning of oily soils. The cleaning composition can be in any physical form but it is preferably a liquid composition. It can be any kind of cleaning composition, including hard surface cleaning, automatic and manual dishwashing, laundry, etc. Preferably, the composition is a hard surface cleaning composition, more preferably a manual dishwashing cleaning composition.

The method of the invention comprises the steps of:
(a) providing an oil medium, a water medium and an oil-water interface;
(b) adding an effective amount of the cleaning composition to the oil medium; and
(c) observing the cleaning composition travelling along the oil medium to break out the oil-water interface.

The method of the invention is a very effective tool to discriminate between the performance of compositions when products are being developed and it is also very efficient to show consumers the performance of products. The method can be performed in parallel with a plurality of products, this provides a direct comparison between products.

The oil medium is preferably liquid and it is preferably present as either an island surrounded by the water medium or an island floating on the water medium. In the case of the oil being present in the form of an island surrounded by water, the oil is directly placed on the surface to be tested and not on water. Preferably, the oil medium has a substantially circular shape.

The method of the invention allows for the quantification of the speed of cleaning by measuring the time taken for the moment in which the composition is delivered to the oil medium to the moment in which the oil-water interface is broken.

A preferred oil for use in the method of the invention is a vegetable oil, more preferably the oil is selected from the group consisting of: sesame oil, canola oil, olive oil, rapeseed oil, coconut oil, corn oil, peanut oil, sunflower oil and mixtures thereof. Olive oil is preferred for use herein. Mixtures of vegetables oils either cooked or uncooked are also suitable for use in the method of the invention.

The method of the invention can be performed with water but it is also possible to add a rheology modifier to the water to increase the viscosity, this would contribute to the physical stabilization of the island without affecting the surface tension of the water.

The water and the oil can be colored to increase the visual contract between each other; a dye can be added to either the water or the oil or both.

Preferably, the weight ratio of the oil medium to the cleaning composition is from about 30 to about 50, more preferably from about 35 to about 45 and especially about 40.

The oil island surrounded by the water medium can be created by placing a first container up-side-down on a second container. Both the first and the second containers have side walls. The first container has an aperture, preferably at the top, to allow the feeding of the oil. When the first container is placed on the second container, the side walls of the first and second container define a moat. The moat is filled with water and then the first container is removed and the oil island is created.

The oil island floating on top of the water medium can be created by providing a water medium comprising water and preferably a rheology modifier and adding oil to the water medium.

According to a second aspect of the invention, there is provided a cleaning composition, preferably a manual dishwashing cleaning composition. The composition has a break out time of the oil-water interface of less than 60, preferably less than 40 and especially less than 30 seconds according to the following method.

A first container having a diameter of 55 mm is placed up-side-down in the centre of a second container having a diameter of 90 mm. The first and the second containers have side walls, preferably the containers are Petri dishes. A moat is created between the side walls of the first and the second container. The first container has an orifice at the top to allow feeding the oil.

Once the first container is placed on the second container, the first container is filled with 2 ml of olive oil. The moat defined between the side walls of the first and second compartment is filled with 12 ml of distilled water. The first container is removed and an oil island is created, immediately after, the first container is removed, 50 µl of the cleaning composition are delivered to the centre of the oil medium. The composition travels toward the oil-water interface and eventually the interface is broken.

According to another aspect of the invention, there is provided a composition having a break-out time of the oil-water interface of less than 100 seconds, preferably less than 40 and especially less than 30 seconds, wherein the water medium is 35 g of water containing 0.15% by weight of the water medium of xhanthan gum and 2.5 g of oil is delivered onto the water medium and a drop of the cleaning composition is delivered to the centre of the oil medium. In this case the break-out time is the average of the break-out time of three different oil medium: i) an uncooked blend of corn oil, sunflower oil and peanut oil where the three oils are in equal weight amount; ii) olive oil; and iii) a baked blend of corn oil, sunflower oil and peanut oil where the three oils are in equal weight amount and the blend is baked for 16 hours at 135°C. Compositions having these low breaking-out times average over three different types of oils are very good for cleaning across a whole spectrum of grease, they are good for cleaning of uncooked grease and cooked grease.

Preferably, the composition of the invention comprises a surfactant system and a solvent.

According to the last aspect of the invention, there is provided the use of the method of the invention in advertising, including media advertising and in-store demonstrations.

### BRIEF DESCRIPTION OF THE DRAWINGS

Further features of the invention are set forth in the following detailed description of the preferred embodiment of the invention and in the drawing figures.

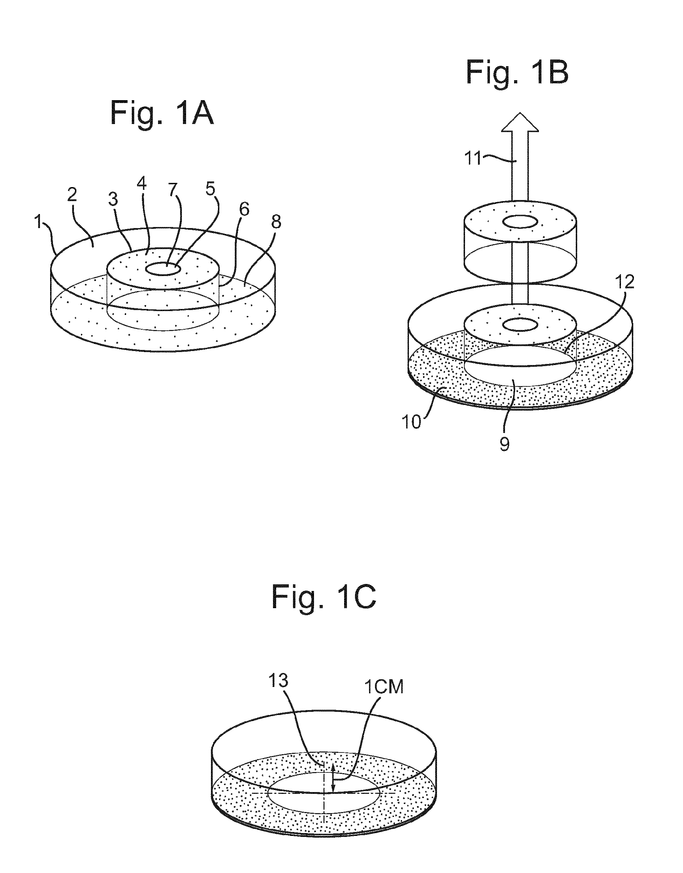

Fig. 1 depicts a setting for performing the method of the invention. Part A displays the first container (7) inside the second container (8). The second container is placed up-side-down at the centre of the first container. The first and the second container have side walls (3 and 2, respectively) defining a moat. The first container has an aperture (5) for the feeding of the oil. Part B displays the removal of the first container. Part C displays the oil island created surrounded by water.

### DETAILED DESCRIPTION OF THE INVENTION

The present invention relates to a method for the visualization of a cleaning composition. The present method is important to show consumers the effectiveness of a cleaning composition, for example, in removing grease, in particular oil, from soiled dishware. An important aspect of the present method is the ability to demonstrate the cleaning performance of a cleaning composition on a consistent basis such as when practicing the method repeatedly over relatively short time periods. Such demonstrations can be conducted in retail stores, in television commercials, in video streaming via the internet, as well as other broadcast media and other live venues. The demonstration method herein is relatively easy to perform and does not require a long period of time to set-up and complete the demonstration method. The method is also suitable to discriminate between compositions for the design of new products.

The method of visualizing the cleaning performance, in particular oil cleaning, of a cleaning composition generally comprises the steps of:
(a) providing an oil medium, preferably a vegetable oil, a water medium and an oil-water interface;
(b) adding an effective amount of the cleaning composition to the oil medium; and
(c) observing the cleaning composition travelling along the oil medium to break out the oil-water interface.

The method of the invention can be performed at any temperature. At high temperature, for example above about 25°C to about 50°C, the method can be performed faster than at ambient temperature, on the other hand al low temperature, for example above about 5°C to about 19°C, the method can be slowed down. Preferably, the method of the invention is performed at ambient temperature.

The oil medium preferably has a diameter greater than about 20 mm, more preferably greater than about 30 mm, more preferably greater than 40 mm and especially greater than about 45 mm. These sizes are suitable for easily visualizing the grease cleaning performance of compositions.

The oil used in the method of the present invention may include cooking oils such as sesame oil, canola oil, olive oil, rapeseed oil, coconut oil, corn oil, peanut oil, sunflower oil and mixtures thereof. Olive oil and mixtures of vegetable oils are preferred for use herein, either as they come or cooked.

The water medium may be distilled water or may contain mineral electrolytes. The mineral electrolytes may increase the interfacial tension of the oil-water interface.

The water can be pure water or water structured with a rheology modifier. The rheology modifier should not alter the surface tension of the water. The rheology modifier can help physically stabilizing the oil medium, in particular when the oil medium is in the form of an island floating on the water medium.

Preferably the rheology modifyier is a non crystalline polymeric rheology modifier. This polymeric rheology modifier can be a synthetic or a naturally derived polymer.

Examples of naturally derived polymeric structurants suitable for use in the method of the present invention include: hydroxyethyl cellulose, hydrophobically modified hydroxyethyl cellulose, carboxymethyl cellulose, polysaccharide derivatives and mixtures thereof. Polysaccharide derivatives include but are not limited to pectine, alginate, arabinogalactan (gum Arabic), carrageenan, gum karaya, gum tragacanth, gellan gum, xanthan gum and guar gum. Examples of synthetic polymeric structurants of use in the present invention include polymers and copolymers comprising polycarboxylates, polyacrylates, polyurethanes, polyvinylpyrrolidone, polyols and derivatives and mixtures thereof.

Preferably the composition according to the invention comprises a naturally derived rheology modifyer polymer, most preferably Xanthan Gum.

Generally, the rheology modifier will be comprised at a level of from 0.001% to 1% by weight, preferably from 0.01% to 0.5% by weight, more preferably from 0.05% to 0.25% by weight of the water medium.

Preferably the method of the invention in which the oil is in the form of an island surrounded by the water medium, is performed in containers. Petri-dishes made of polypropylene are extremely suitable for the method of the invention. Preferably the oil is in the form of an island in the water, the island can be formed by placing a sided wall container (first container) up-side-down in another container of greater diameter than the first container. The first container comprises an orifice, preferably in the center of the container that is used to feed the oil. The oil may be fed with a micropipette. The first container is usually placed in a concentric manner in the centre of the second container. The first and second containers (both sided-walled containers) define a moat. The moat is filled with water, the first container is removed, creating the oil island. As soon as the first container is removed the cleaning composition is delivered onto the oil. The combination of the cleaning composition and the oil moves toward the water and break the oil-water interface.

The method of the invention in which the oil is in the form of an island floating on the water medium, can be perform on any dishware item. Preferably, it is performed on a plate, preferably a ceramic plate, more preferably a white plate.

The cleaning composition can be delivered to the oil medium using any known method, including directly from the container holding the cleaning product, it can be sprayed on the oil medium, etc. Preferably the composition is delivered by means of a pipette, to have a precise control of the amount of composition delivered and where it is delivered.

The weight ratio of oil to water may be about 1:4 to 1:8, preferably 1:5 to 1:7.

The oil and/or water may comprise a colorant to enhance the ability of the observer to visualize the oil that has been removed from the surface. Colorants are optionally incorporated in the oil or water to provide an enhanced color and contrast. Colorants can be important to better display the removal of the oil composition from the demonstration surface. The colorants that are incorporated into the oil and/or water of the present invention are preferably dry or powder colorants such as graphitic carbons (e.g. activated carbon, carbon black, carbon lampblack, activated charcoal, coke, and the like), iron oxide, natural burnt umber, chromium oxide, ultra marine blue, titanium dioxide, and the like, and are commercially available from Harcross Pigments, Inc., Bayer Corporation, Reckitts Colour Ltd., Mallinckrodt Baker Inc., and DuPont Corp. Liquid colorants can also be used in the present invention. If a liquid colorant is used it should be capable of being dispersed in aqueous carrier. An exemplary colorant is a graphitic carbon, such as activated carbon. A suitable activated carbon colorant is commercially available from Mallinckrodt Baker, Inc. (Phillipsburg, NJ USA). Dyes are also preferred to colour the oil and/or water. The oil and/or water may comprise a colorant at a level of from about 0.01% to about 10%, preferably from about 0.1% to about 1%, by weight thereof.

The present invention further encompasses a cleaning composition having a short break out time for the oil-water interface, compositions having a short break-out time are very good from a cleaning viewpoint, in particular for the cleaning of greasy soils, more in particular for the cleaning of oils.

Preferably the composition of the invention comprises a surfactant system and a solvent. More preferably the surfactant system comprises an amine oxide surfactant and even more preferably the surfactant system further comprises a sulfated anionic surfactant. These compositions provide very good oil cleaning. Also preferred are compositions comprising a glycol ether solvent selected from the group consisting of glycol ethers of Formula I:
R1O(R2O)nR3, Formula II: R4O(R5O)nR6 and mixtures thereof
   wherein
R1 is a linear or branched C4, C5 or C6 alkyl or a substituted or unsubstituted phenyl, R2 is ethyl or isopropyl, R3 is hydrogen or methyl and n is 1, 2 or 3
R4 is n-propyl or isopropyl, R5 is isopropyl, R6 is hydrogen or methyl and n is 1, 2 or 3

### Test Method to visualize grease cleaning

### Method 1 (oil medium surrounded by water medium)

Oil cleaning is assessed by means of measuring the time to break out the oil-water interface (i.e., from the moment in which the composition is delivered to the moment in which the oil medium collapses).
The test is carried out at ambient temperature of 21°C+-2°C. All used products should be acclimatized within this temperature range.

A Petri dish (1) (VWR Article #391-0441 / Ø90mm) is put on a water-leveled surface, with opening (2) facing upwards. A second smaller Petri dish (3) (VWR Article #391-0866 / Ø55mm) is put in the middle of the first Petri dish, with opening (4) facing downwards. A hole (5) is made in the smaller Petri-dish. The hole (5) should be sufficiently big to allow product dosing by means of a micropipette. Care should be taken to maintain the structural integrity of the side-wall (6) whilst making the hole. The sidewall should maintain its round shape. By means of a micropipette (Eppendorf Article #4986000.025 / Multipette XStream) with disposable tip (Eppendorf Article #022266.501 / Combitip Plus 10ml) 2ml of olive oil (Bertolli Olive Oil Classico) is dispensed through the hole of the small Petri dish (7). By means of a micropipette (Eppendorf Article #4986000.025 / Multipette XStream) with disposable tip (Eppendorf Article #0030089.480 / Combitip Advanced 50ml) 12 ml of deionized water is dispensed in the moat of the larger Petri dish that surrounds the inner Petri dish (8). This creates an island of oil in the middle (9) surrounded by a moat of water (10), but physically separated by the sidewall of the inner Petri dish. The inner Petri dish is then carefully removed (11) to create an oil-water interface (12), as shown in Figure 1.

A micropipette (Eppendorf Article #4831000.732 / Xplorer Plus 1000µl) with disposable tip (Eppendorf Article #0030073.460 / Etips Reloads 50-1000µl) is used to dispense the cleaning composition. The dispensing speed of the Micropipette is set at highest speed. 50µl of product is then dispensed in the middle of the oil medium from a height of approximately 1cm (13). In parallel, a timer is starter the moment the product is dispensed. When the oil medium brakes at the oil water interface, the timer is stopped and time is recorded in seconds. If no end-point is detected after 180s the test is stopped. The test is repeated 4 times to allow statistical analysis, and average breaking times are reported.

### Method 2 (oil medium floating on the water medium):

The ability of the compositions to penetrate oil was assessed by measuring the breakthrough time, using the following methodology:
35 gram of water solution containing 0.15% by weight of the solution of xanthan gum (supplied by KeltrolTM RD from CP-kelco) was poured into a glossy white ceramic dish plate (Supplied by Ikea- Item: S.Pryle #13781 diameter 26.5cm). Then 2.5 grams of dyed olive oil was delicately deposited onto the water surface thus forming a thin disk of oil layer. The oil disk diameter is measured to ensure that the diameter does not exceed a variation amongst the replicates of more than 20% from the average value.

A drop of the cleaning composition was delicately deposited on to the oil medium, in the middle of the oil disk from a 5ml Pasteur pipette (Supplied by VWR - Item: 5ml #612-1684), from a height of less than 5 mm.

The break out time was measured as the time recorded from the deposition of the solution drop to the opening of the oil disk identified by the appearance of the water layer in the middle of the oil disk. 8 replicates were required per sample to calculate the average break out time. The break out time is the average of the break out time of the three oils described herein below (Oils 1 to 3):
Oil 1: Corn oil (Supplier: Vandemoortele - Item: #1001928), peanut oil (Supplier: Vandemoortele - Item: #1002974) and sunflower oil (Supplier: Vandemoortele - Item: #1001926) are mixed in equal weight amounts. Whilst mixing, 1wt.% black dye (Supplier: AMRESCO - Item: Sudan Black B #0593) is added on top. Mixing is continued afterwards for 1 hour.
Oil 2: Olive oil (Sold by Unilever under the Bertoli brand, item number L5313R HO756 MI0002) was dyed red through the addition of 0.05% by weight of red dye (red dye pigment supplied by Avecia, Waxoline Red yp fw, 78756 Mix 9310 / SLE 08/05/10), stirring for 1 hour in order to provide a homogeneous dye distribution.
Oil 3: 20g of oil 1 is placed in a Borosilicate Glass baking dish (Supplier: Pyrex - Item: sku232B000) and baked in an oven at 135°C for 16 hours. After baking, the Pyrex plate is put overnight in a humidity cabinet at 25 °C and 70% humidity level. The polymerized oil is then collected in a glass vial.

### Cleaning composition

The cleaning compositions of the invention are preferably hand dishwashing cleaning compositions, preferably in liquid form.

Preferably the compositions of the invention comprise:
i) from about 5 to about 15%, preferably from about 7 to about 12% by weight of the composition of a surfactant system; and
ii) a glycol ether solvent selected from the group consisting of glycol ethers of Formula I: R10(R20)nR3, Formula II: R4O(R5O)nR6 and mixtures thereof
   wherein
   R1 is a linear or branched C4, C5 or C6 alkyl or a substituted or unsubstituted phenyl, R2 is ethyl or isopropyl, R3 is hydrogen or methyl and n is 1, 2 or 3
   R4 is n-propyl or isopropyl, R5 is isopropyl, R6 is hydrogen or methyl and n is 1, 2 or 3

Preferably, the surfactant system and the glycol ether solvent are in a weight ratio of from about 5:1 to about 1:1, more preferably from about 3:1 to about 1:1.

Preferably, the composition of the invention has a pH greater than 8, more preferably from 10 to 12, most preferably from 10.5 to 11.5 as measured at 10% solution in distilled water at 20°C and a reserve alkalinity of from about 0.1 to about 1, more preferably from about 0.1 to about 0.5. Reserve alkalinity is herein expressed as grams of NaOH/100 ml of composition required to titrate product from a pH 10 to the pH of the finished composition. This pH and reserve alkalinity further contribute to the cleaning of tough food soils.

Compositions having a surfactant system comprising an anionic surfactant and a co-surfactant provide very good and fast cleaning in both cooked and uncooked oil. They have a break out time of less than 100 seconds, preferably less than 60 seconds and especially less than 40 seconds according to Method 2.

Preferably the anionic surfactant is a sulfated surfactant, more preferably an alkyl ethoxylated sulfate or a branched short chain alkyl sulfate. It has been found that alkyl ethoxylated sulfate with an average degree of ethoxylation from about 2 to about 4, more preferably about 3, performs better in terms of cleaning and speed of cleaning than other ethoxylated alkyl sulfate surfactants with a lower degree of ethoxylation.

By a "branched short chain alkyl sulfate" is herein meant a surfactant having a linear alkyl sulfate backbone, the backbone comprising from 4 to 8, preferably from 5 to 7 carbon atoms, substituted with one or more C1-C5 preferably C1-C3 alkyl branching groups in the C1, C2 or C3, preferably C2 position on the linear alkyl sulfate backbone. This type of anionic surfactant has been found to deliver strong grease cleaning as well as good foaming performance, especially immediate foaming performance upon spraying when the composition comprises amine oxide or betaine, preferably amine oxide as co-surfactant. Preferred branched short chain alkyl sulfate for use herein is a branched hexyl sulfate, more preferably 2-ethyl hexyl sulfate.

Preferably, the co-surfactant is selected from the group consisting of betaine, amine oxide and mixtures thereof. Amine oxide is the preferred co-surfactant for use herein. The co-surfactant seems to help with the sudsing of the product. Particularly good performing products are those in which the anionic surfactant and the co-surfactant are present in a weight ratio of about 4:1 to about 1:1, preferably in a weight ratio of from about 3:1 to about 1:1, most preferably in a weight ratio from about 2:1 to about 1:1. Especially preferred are compositions in which the co-surfactant comprises amine oxide.

A preferred composition has a pH of from 10 to 11.5 as measured in a 10% solution in distilled water at 20°C, a reserve alkalinity of from 0.1 to 0.3 expressed as g NAOH/ 100ml of composition at a pH of 10, the composition comprising:
i) from about 4 to about 10%, preferably from about 5 to about 8% by weight of the composition of an alkyl ethoxylated sulfate, preferably the alkyl ethoxylated sulfate having an average degree of ethoxylation of about 3;
ii) from about 1 to about 5% by weight of the composition of amine oxide surfactant; and
iii) from about 3% to about 8%, preferably from about 4 to about 7% by weight of the composition of glycol ether solvent, preferably dipropylene glycol n-butyl ether.

Another preferred composition has a pH of from 10 to 11.5 as measured in a 10% solution in distilled water at 20°C, a reserve alkalinity of from 0.1 to 0.3 expressed as g NAOH/ 100ml of composition at a pH of 10, the composition comprising:
i) from about 4 to about 10%, from about 5 to about 8% by weight of the composition of a branched short chain sulfate, preferably 2-ethyl hexyl sulfate,
ii) from about 1 to 5% by weight of the composition of amine oxide surfactant; and
iii) from about 3% to 8%, preferably from about 4 to about 7% by weight of the composition of glycol ether solvent, preferably dipropylene glycol n-butyl ether.

Compositions having a surfactant system comprising a primary surfactant selected from the group consisting of amphoteric surfactant, zwitteronic surfactant and mixtures thereof and a co-surfactant selected from the group consisting of non-ionic surfactant, anionic and mixtures thereof provide very good and fast cleaning of uncooked oil. They have a break out time of less than 100 seconds, preferably less than 60 seconds and especially less than 40 seconds according to Method 1. Preferably the primary surfactant comprises amine oxide and the co-surfactant comprises non-ionic surfactant.

A preferred composition comprises:
i) 4 to 10% by weight of the composition of an amine oxide surfactant;
ii) 1 to 5% by weight of the composition of non-ionic surfactant; and
iii) 3% to 8% by weight of the composition of glycol ether solvent, preferably dipropylene glycol n-butyl ether.

The compositions of the invention comprises glycol ethers selected from the group consisting glycol ethers of Formula I, Formula II and mixtures thereof. It has been found that these glycol ethers help not only with the speed of cleaning of the product but also with the cleaning, especially greasy soils cleaning. This does not seem to happen with glycol ethers having a different formula to Formula I and Formula II.

Preferably, the compositions of the invention further comprise a chelant, preferably an aminocarboxylate chelant, more preferfably GLDA. The aminocarboxylate not only act as a chelant but also contributes to the reserve alkalinity, this seems to help with the cleaning of cooked-, baked- and burnt-on soils. Preferably, the compositions of the invention comprise bicarbonate and/or monoethanol and/or carboxylate builder preferably citrate builder, that as in the case of the of the aminocarboxylate chelant also contribute to the reserve alkalinity.

### Examples

The cleaning performance of the below tabulated compositions is visualized using Method 1 described herein above. The break out time of the oil-water interface for each composition is measured.

| % active by weight of the composition | Example A | Comparative Example A | Comparative Example B | Comparative Example C | Comparative Example D |
|---|---|---|---|---|---|
| Water and minors (preservative, perfume, dye) | To 100 parts | To 100 parts | - | To 100 parts | To 100 parts |
| Sodium Chloride | 0.4 | 0.4 | - | 0.11 | - |
| Sodium bicarbonate | 0.1 | 0.1 | - | - | - |
| Potassium carbonate | - | - | - | - | 1 |
| Sodium silicate | - | - | - | - | 0.3 |
| Ethanol | 0.34 | 0.34 | - | 0.215 | - |
| Polypropylene glycol MW 2000 | 0.05 | 0.05 | - | 0.12 | - |
| Sodium Cumene Sulphonate | - | - | - | - | 4.56 |
| Dowanol DPnB Glycol Ether | 5 | - | 100 | - | 5 |
| Dowanol Eph Glycol Ether | - | - | - | - | 5 |
| Monoethanolamine | 0.5 | 0.5 | - | - | 5 |
| Sodium Hydroxide | - | - | - | 0.02 | 0.64 |
| Alkyl Ethoxy Sulphate (C24EO0.6) | - | - | - | 0.2253 | - |
| Alkyl Dimethyl Amine Oxide (C12-14) | 6.67 | 6.67 | - | 0.644 | 1 |
| C10 (Guerbet) alcohol 8 Ethoxylated | - | - | - | 0.044 | - |
| Non-ionic Alkyl Ethoxylate (C9-11EO8) | 1.33 | 1.33 | - | - | - |
| Acusol 823 | - | - | - | - | 1.5 |
| Laponite RDS | - | - | - | - | 0.31 |
| Laponite RD | - | - | - | - | 0.31 |
| pH (10% dilution in demi water) | 10.1 | 10.1 | n.a. | 9.1 | 11.4 |

### Results:

Example A represents a composition according to the invention. Comparative examples A, B, C and D represent formula compositions outside the scope of the invention. Composition D represents a commercially available product, Dreft Power Spray as sold in Belgium in 2015. The composition according to Example A provides better cleaning than the comparative compositions.

| | Example A | Comparative Example A | Comparative Example B | Comparative Example C | Comparative Example D |
|---|---|---|---|---|---|
| Oil-water interface break out time (seconds) | 21 | 102 | >180 | >180 | >180 |

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. A method of visualizing the cleaning performance of a cleaning composition, said method comprising the steps of:
(a) providing an oil medium, a water medium and an oil-water interface;
(b) adding an effective amount of the cleaning composition to the oil medium; and
(c) observing the cleaning composition travelling along the oil medium to break out the oil-water interface.

2. A method according to the preceding claim wherein the oil medium is present as an island surrounded by the water medium or an island floating on the water medium.

3. A method according to any of the preceding claims wherein the oil medium has a substantially circular shape.

4. A method according to any of the preceding claims including the step of quantifying the speed of cleaning by measuring the time taken for the composition to break out the oil-water interface.

5. A method according to any of the preceding claims wherein the oil is a vegetable oil, preferably selected from the group consisting of: sesame oil, canola oil, olive oil, rapeseed oil, coconut oil, corn oil, peanut oil, sunflower oil and mixtures thereof

6. A method according to any of the preceding claims wherein the oil is a cooked oil.

7. A method according to any of the preceding claims wherein the water medium and/or the oil medium are coloured.

8. A method according to any of the preceding claims wherein the weight ratio of the oil medium to the cleaning composition is from about 30 to about 50.

9. A method according to any of the preceding claims wherein the water medium comprises a rheology modifier, preferably xanthan gum.

10. A method according to any of claims 2 to 9 wherein the oil island is created by placing a first container, having side walls, up-side-down on a second container, having side walls, wherein the first container has an aperture to allow the feeding of the oil, the side walls of the first and second container defining a moat and wherein the moat is filled with water and wherein the first container is subsequently removed.

11. A method according to any of claims 2 to 9 wherein the oil island is created by providing a water medium comprising water and preferably a rheology modifier and adding oil to the water medium.

12. A cleaning composition having a break-out time of the oil-water interface according to the method of claim 10 of less than 60 seconds when the first container has a diameter of 55 mm and it is filled with 2 ml of olive oil and the second container has a diameter of 90 mm and it is filled with 12 ml of distilled water and 50 µl of the cleaning composition are delivered to the centre of the oil medium.

13. A cleaning composition having a break-out time of the oil-water interface according to the method of claim 11 of less than 100 seconds wherein the water medium is 35 g of water containing 0.15% by weight of the water medium of xhanthan gum and 2.5 g of oil are delivered onto the water medium and a drop of the cleaning composition is delivered to the centre of the oil medium wherein the break-out time is the average break-out time using three different oil media, an uncooked blend of corn oil, sunflower oil and peanut oil where the three oils are in equal amount, olive oil and baked blend of corn oil, sunflower oil and peanut oil where the three oils are in equal amount (baked for 16 hours at 135°C).

14. A cleaning composition according to claims 12 or 13 wherein the break-out time is less than 40, preferably less than 30 seconds.

15. A cleaning composition according to any of claims 12 to 14 wherein the cleaning composition is a manual dishwashing cleaning composition

16. A cleaning composition according to any of claims 12 to 15 comprising a surfactant system and a solvent.

17. A cleaning composition according to the preceding claim wherein the surfactant system comprises an amine oxide.

18. A cleaning composition according to any of claims 16 or 17 wherein the surfactant system comprises a sulphated anionic surfactant.

19. A cleaning composition according to any of claims 16 to 18 wherein the solvent is a glycol ether solvent selected from the group consisting of glycol ethers of Formula I:
R1O(R2O)nR3, Formula II: R4O(R5O)nR6 and mixtures thereof
wherein:
R1 is a linear or branched C4, C5 or C6 alkyl or a substituted or unsubstituted phenyl, R2 is ethyl or isopropyl, R3 is hydrogen or methyl and n is 1, 2 or 3
R4 is n-propyl or isopropyl, R5 is isopropyl, R6 is hydrogen or methyl and n is 1, 2 or 3

20. Use of the method according to any of claims 1 to 11 to advertise the cleaning performance of a cleaning composition.
